(19) Europäisches Patentamt
European Patent Office
Office européen des brevets

(11) **EP 4 440 142 B1**

(12) **EUROPEAN PATENT SPECIFICATION**

(45) Date of publication and mention
of the grant of the patent:
**25.02.2026 Bulletin 2026/09**

(21) Application number: **23184699.9**

(22) Date of filing: **11.07.2023**

(51) International Patent Classification (IPC):
**H04Q 11/00** (2006.01)

(52) Cooperative Patent Classification (CPC):
**H04Q 11/0005; H04Q 2011/0045**

(54) **PROGRAMMABLE DELAY IN NETWORKING OPTICS**

PROGRAMMIERBARE VERZÖGERUNG IN EINER NETZWERKOPTIK

RETARD PROGRAMMABLE DANS DES OPTIQUES DE MISE EN RÉSEAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.03.2023 US 202318127103**

(43) Date of publication of application:
**02.10.2024 Bulletin 2024/40**

(60) Divisional application:
**26152767.5**

(73) Proprietor: **Google LLC
Mountain View, CA 94043 (US)**

(72) Inventors:
• **LEFEBVRE, Benoit
Mountain View, CA, 94043 (US)**
• **SHEN, Zuowei
Mountain View, CA, 94043 (US)**
• **LIU, Hong
Mountain View, CA, 94043 (US)**
• **SINGH, Arjun
Mountain View, CA, 94043 (US)**

(74) Representative: **Betten & Resch
Patent- und Rechtsanwälte PartGmbB
Maximiliansplatz 14
80333 München (DE)**

(56) References cited:
**US-A1- 2009 060 506    US-A1- 2016 277 272**

## Description

BACKGROUND

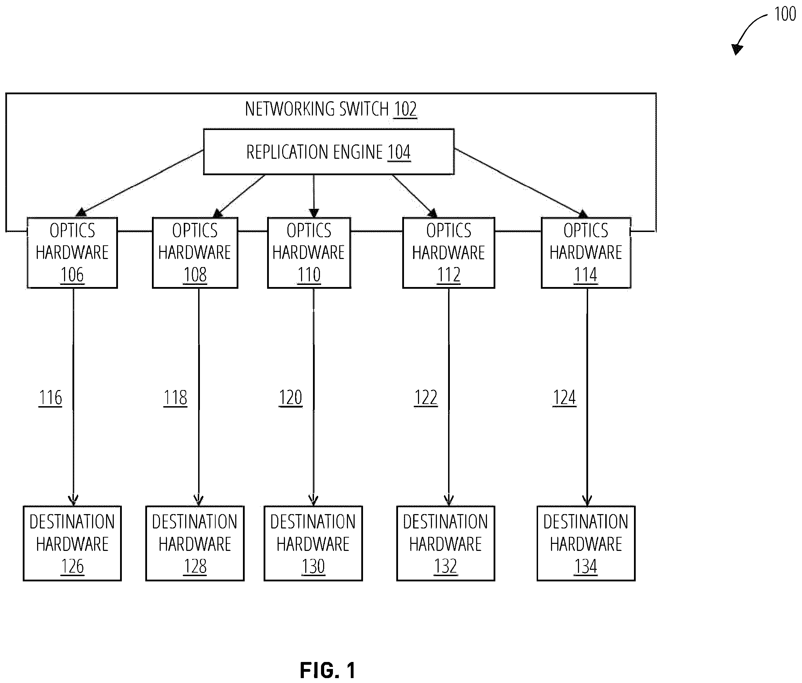

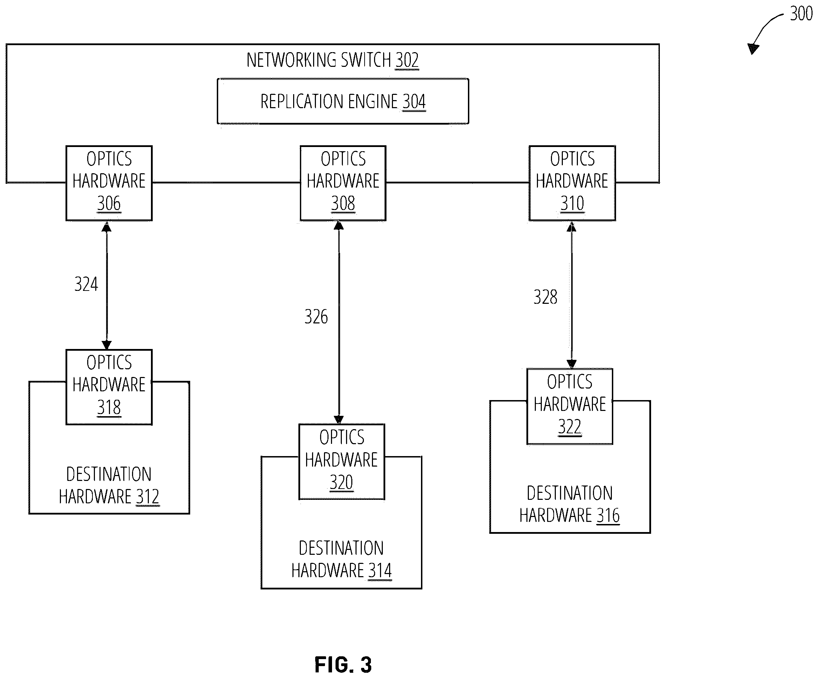

Fairness in transmitting and receiving data is based on the premise that end users receive the same information at the same time and that it takes the same amount of time to send information to all end users. To ensure fairness, networks typically modify the length of physical cables within the network through which the data is transmitted to increase or decrease latency along a certain network path. Increasing or decreasing the length of a cable is difficult in terms of precision. Further, increasing or decreasing the length of the cable is costly, in both labor and materials, especially when in a large-scale network. US 2016/277272 A1 describes systems, methods, and associated apparatuses for the continuous measurement of transit latency in individual data switches and multi-device topologies to provide a scalable, non-intrusive mechanism for the continuous measurement of transit latency at a per-device and network topology level on production networks (see Fig. 1 and 3). US 2009/060506 A1 provides a method to suppress the skew among multiple switch control signals so that an optical packet can be transmitted to the destination of the optical packet by switching the path of the optical path at an accurate time (see Fig. 3).

BRIEF SUMMARY

The technology is generally directed to programming delays in hardware already existing within fiber networks to reduce the unfairness in transmitting and receiving data. The delays may be programmed in the optics hardware after the deployment of the network. The delays may be determined based on the time it takes the networking switch to replicate data to be transmitted and/or the length of the cables. According to some examples, the delays may be programmed at either or both the egress and ingress optics hardware of a cable. The programmable delay reduces the unfairness of one destination, or end user, receiving data before another destination when the information is intended to be received synchronously.

One aspect of the technology is directed to a method comprising identifying, by one or more processors, a plurality of cables at a network switch, determining, by one or more processors, a number of remaining copies of data for a given cable of the plurality of cables, wherein the number of remaining copies comprises a total number of cables in the plurality of cables minus a number of completed copies of data, determining, by the one or more processors, a delay for each of the plurality of cables, wherein the delay for a respective cable is based on: the remaining number of copies of data for the respective cable, and a length of time to make each copy of data, and programming, by the one or more processors based on the respective delay, optics hardware for the respective cable.

The optics hardware may comprise ingress and egress optics hardware. Programming the optics hardware may comprise programming at least one of the ingress optics hardware or the egress optics hardware. When programming the optics hardware, the method may further comprise programming, by the one or more processors based on the delay for the respective cable, the ingress optics hardware and transmitting, based on the delay for each of the plurality of cables, the data synchronously via the plurality of cables.

The method may further comprise copying, by a replication engine, the data to be transmitted via the plurality of cables, wherein a total number of copies made by the replication engine corresponds to the total number of cables in the plurality of cables minus one.

The method may further comprise determining, by the one or more processors, a length of each cable; and determining, by the one or more processors, a second delay based on the length of each cable. Determining the second delay may further comprise determining, by the one or more processors, a length of time for the data to travel along the length of each cable, comparing, by the one or more processors, the lengths of time, and determining, by the one or more processors based on the comparison, the second delay for each of the cables. The method may further comprise programming, by the one or more processors based on the second delay for the respective cable, the optics hardware for the respective cable.

The delay for each cable may allow for the data transmitted via respective cables to arrive at respective destinations synchronously.

Another aspect of the technology is directed to a device comprising one or more processors. The one or more processors may be configured to identify a plurality of cables at a network switch, determine a number of remaining copies of data for a given cable of the plurality of cables, wherein the number of remaining copies comprises a total number of cables in the plurality of cables minus a number of completed copies of data, determine a delay for each of the plurality of cables, wherein the delay for a respective cable is based on: the remaining number of copies of data for the respective cable and a length of time to make each copy of data, and program, based on the respective delay, optics hardware for the respective cable.

Yet another aspect of the technology is directed to a non-transitory storage medium, the storage medium including instructions that when executed by one or more processors, cause the one or more processors to: identify a plurality of cables at a network switch, determine a number of remaining copies of data for a given cable of the plurality of cables, wherein the number of remaining copies comprises a total number of cables in the plurality of cables minus a number of completed copies of data, determine a delay for each of the plurality of cables, wherein the delay for a respective cable is based on:

the remaining number of copies of data for the respective cable and a length of time to make each copy of data, and program, based on the respective delay, optics hardware for the respective cable.

BRIEF DESCRIPTION OF THE DRAWINGS

FIG. 1 is a block diagram of an example network in which all cable lengths are equal according to aspects of the disclosure.

FIG. 2 is a block diagram of an example network in which the cable lengths may vary according to aspects of the disclosure.

FIG. 3 is a block diagram of an example network in which both ends of the cables include optics hardware according to aspects of the disclosure.

FIG. 4 is a block diagram of an example system according to aspects of the disclosure.

FIG. 5 is a flow diagram of an example method for programming a delay according to aspects of the disclosure.

DETAILED DESCRIPTION

The technology is generally directed to programming delays in a fiber optic network to reduce the unfairness in transmitting and receiving data. The programmable delays allow for data to be transmitted and/or received synchronously. This may reduce the unfairness of one destination, or end user, receiving data before another destination when the information is intended to be distributed synchronously.

The delays may be programmed in the optics hardware after the deployment of the fiber optic network. The optics hardware may be configured, for example, via an I2C bus. For example, the fiber optic network may include a plurality of fiber optic cables, networking switches, optics hardware, etc. The delays may be programmed at either or both the egress and ingress optics hardware of a cable. The delay amount may be determined based on the cable inequality between the networking switch and user hardware. The delay amount may, additionally or alternatively, be determined based on the time it takes the networking switch to replicate the data to be transmitted. According to some examples, the delay may be programmed at the egress and/or ingress optics hardware to compensate for the different cable lengths.

By determining and programming the delays after the deployment of the fiber optic network, the delays may be determined based on real-time latency variances within the cables of the system. Further, by programming the delays based on the real-time variances, the delay for each cable may be determined and implemented efficiently. For example, programming a delay mitigates the need to make manual changes to the fiber optic network, such as adding or removing fiber lengths. This increases the efficiency of correcting the unfairness while decreasing the cost for materials, as the delays are programmed into hardware that is already part of the fiber optic network.

The programmable nature of the delays allows for the system to be scaled and implemented for large data centers. For example, the delays may be determined and programmed for specific channels based on measured data. The programmable delays are also suitable for use in highspeed data centers, in which data travels at rates of gigabits per second, *e.g.,* 25 Gbs/sec.

FIG. 1 illustrates an example configuration of a network between the networking switch and the destination hardware. The network may be, for example, a fiber optic network, copper or ethernet network, etc. The network 100 may include a networking switch 102, optics hardware 106-114, a plurality of cables 116-124, and destination hardware 126-134. According to some examples, the networking switch 102 may be a top of rack ("TOR") switch and the destination hardware 126-134 may be user or customer hardware. The networking switch 102 may include a replication engine 104. The replication engine 104 may be configured to replicate, or copy, data to be transmitted via cables 116-124. The cables 116-124 may be, for example, fiber optic cables, ethernet cables, etc.

Data may be transmitted from the networking switch 102 to a plurality of destinations 126-134, or end users, via cables 116-124. The networking switch 102 may be, in some examples, a leaf of a multicast tree. To prevent unfairness in the destination hardware 126-134 receiving data via the networking switch 102 at different times, the data should arrive at the destination hardware 126-134 at substantially the same time. The data may be, for example, multicast packets. To ensure that the data arrives at the destination hardware 126-134 at the same time, a delay for each cable 116-124 may be determined. The delay may be determined after the fiber optic network 100 has been deployed and programmed in the optics hardware 106-114 prior to transmitting the data from the networking switch 102 to the destination hardware 126-134. The delay may be programmed in an effort to ensure fairness that the data, once transmitted, is received synchronously by the destination hardware 126-134.

A plurality of cables 116-124 may be coupled to the networking switch 102. Data may be transmitted from the networking switch 102 to the destination hardware 126-134 via the plurality of cables 116-124. The order that the data is transmitted via the cables 116-124 may be static. The static order may indicate that the order of transmission does not change between data transmissions. According to some examples, by determining the static order, a delay for each individual cable may be determined, rather than a blanket delay for all cables. For example, as shown in FIG. 1, cable 116 may be first in the static order while cable 124 may be last in the static order. In such an example, cable 118 would be second, cable 120 would be third, and cable 122 would be fourth. In this example, the static order of the cables 116-124 as being ordered from left to right. In another example, the static order of cables 116-124 may be ordered from right to left such that cable 124 is first in the static order and cable 116 is last in the static order, from the center and moving to the right such that cable 120 is first in the static order and cable 118 is last in the static order, etc. Accordingly, ordering the cables 116-124 from left to right is just one example and is not intended to be limiting.

According to some examples, each cable 116-124 may have a different delay based on its place in the static order of transmission and the number of remaining copies to be made. For example, a cable in the beginning of the static order of transmission will have a greater delay than a cable at the end of the static order of transmission. For example, if cable 116 is the first cable in the static order and cable 124 is the last cable in the static order, cable 116 will have a greater delay than cable 124. The delay may be determined based on the amount of time the replication engine 104 requires to replicate the data and the number of times the replication engine 104 has to replicate the data. In some examples, the delay may be determined based on the number of remaining copies to be made after a copy is made for a respective cable.

According to some examples, the number of remaining copies to be made may be determined based on the total number of cables coupled to the networking switch 102 minus the number of completed copies. As shown in FIG. 1, there are five cables 116-124 in the network 100. Using cable 118, the second cable in the static order of transmission, as an example, two copies have been made, e.g., a copy for cable 116 and cable 118. The number of remaining copies to be made after the copy for cable 118 is three. To determine the delay for the second cable, e.g., cable 118, the number of copies remaining, three, may be multiplied by how long it takes the replication engine 104 to make a copy of the data.

The delay may allow for each cable 116-124 to receive a copy of the data from the replication engine 104 prior to the data being transmitted. In some examples, the delay for each cable 116-124 may allow for the data to be transmitted simultaneously and/or received synchronously by the destination hardware 126-134. The delay may be programmed into the egress and/or ingress optics hardware 106-114. For example, the data may be transmitted simultaneously and a delay may be programmed at the ingress optics hardware 106-114 such that the data is received synchronously by the destination hardware 126-134. In another example, a delay may be programmed at the egress optics hardware 106-114 such that the data is transmitted on a delay but received synchronously by the destination hardware 126-134. In yet another example, a delay may be programmed at both the egress and ingress optics hardware 106-114 such that the data is received synchronously by the destination hardware 126-134.

As an example, if there are five cables cable 116-124, as shown in FIG. 1, and the replication engine 104 requires 1ns per replication, the delay of the first cable 116 may be 4ns, the delay of the second cable 118 may be 3ns, etc., while the delay of the fifth cable 124 may be 0ns. The 4ns delay at the first cable 116 may allow for the replication engine 104 to replicate the data for each subsequent cable 118-124 in the order of transmission. By delaying the transmission of the data via the first cable 116 by 4ns, each remaining cable 118-124 may receive a copy of the data to be transmitted during the delay. Further, by delaying the transmission of the data via the first cable 116 by 4ns, the final copy of the data for the last cable 124, e.g., the fifth cable 124, may have been completed. The delay at the first cable 116 may, therefore, correspond to how long it will take for the replication engine 104 to make a copy of the data for each of the remaining cables 118-124.

The delay may, additionally or alternatively, be based on the length of the fiber. For the purposes of the example shown in FIG. 1, the length of each cable 116-124 is substantially equal. In examples where the lengths of the cables 116-124 are substantially equal, a delay to compensate for the differences may not be required.

After the delay period, the data may be transmitted from the networking switch 102 to the destination hardware 126-134. The delay for each cable 116-124 may allow for the data to be transmitted by the networking switch 102 and, therefore, received synchronously by the destination hardware 126-134.

While FIG. 1 illustrates a network 100 in which networking switch 102 may be a TOR and destination hardware 126-134 may be end users, according to some examples, the destination hardware 126-134 may be a TOR such that networking switch 102 is just a networking switch, such as an S2 switch, and not a TOR. In such an example, each destination hardware 126-134 may be a leaf in a multicast tree. The delay may be determined to compensate for the replication engine 104 fanout from the networking switch 102 to the destination hardware 126-134, e.g., each leaf in the multicast tree.

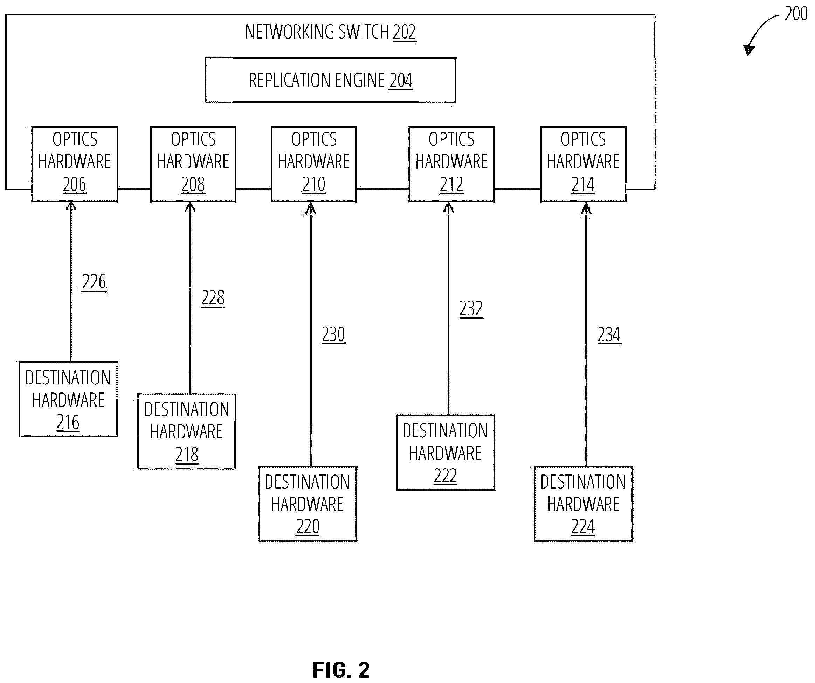

FIG. 2 illustrates another example configuration of a network. The network 200 is substantially similar to the network 100 described with respect to FIG. 1 such that network 200 may include a networking switch 202, optics hardware 206-214, cables 226-234, and destination hardware 216-224. The networking switch 202 may be, for example, a TOR leaf in a multicast tree. The destination hardware 216-224 may be customer hardware, or the hardware at the location of an end user. The cables 226-234 differ from the cables 116-124 in FIG. 1 in that the lengths of the cables 226-234 may be different. In such an example where the cables 226-234 are of different lengths, the delay for transmitting data from the networking switch 202 to the destination hardware 216-224 may be determined based on the length of the cable 226-234 in addition to or instead of the time it takes the replication engine 204 to copy the data for each cable 226-234.

Data traveling via a longer cable may take more time to reach its destination as compared to data traveling via a shorter cable. To compensate for the differences in the length of time it takes data to travel different cable lengths, a delay may be programmed into the egress and/or ingress optics hardware. The delay programmed in the optics hardware based on the length of the cable may be in addition to, or as an alternative of, the delay determined based on the time it takes to replicate data.

The delay based on the length of the cables may be determined using kinematics equations. For example, knowing the speed at which the data packets travel along the cable and the length of the cable, the time it takes data to travel from the networking switch 202 to the respective destination hardware 216-224, or vice versa, may be determined. According to some examples, the size of the data packet may, additionally or alternatively, be used when determining the speed at which the data packet travels through the cable.

Using kinematics equations, the time it will take the data to travel along each cable may be determined. For example, a kinematics equation such as

$$v = \frac{\Delta x}{t}$$

, where $\Delta x$ corresponds to the distance of the cable, v corresponds to the initial speed of the data traveling through the cable, and t corresponds to the time it takes the data to travel the length of the cable. The time it will take the data to travel each cable may be compared to determine the delay. As an example, if it takes data 516ns to travel 105m and 492ns to travel 100m, a delay of 24ns may be added to the ingress or egress optics of the 100m. The delay may allow for the data to be synchronously received by the end users, even though the cable lengths are different. This may reduce unfairness in both unicast and multicast traffic.

Using the network 200 configuration in FIG. 2 as an example, cable 226 may be 100 meters in length, cable 228 may be 101 meters in length, cable 230 may be 103 meters in length, cable 232 may be 112 meters in length, and cable 234 may be 103 meters in length. Data may take 5ns to travel 1 meter of cable, such that the speed the data travels at may be 0.2 m/ns. Based on the length of each cable and the speed it takes to travel each cable, the delay for each cable may be determined. The delay may be determined by comparing the time it takes data to travel on a respective cable as compared to the time it takes data to travel via the longest cable of the network 200. According to some examples, a difference in the lengths of the cable as compared to the longest cable length may be determined. Knowing the speed at which data travels via the cables, the difference in length may be used to determine the delay.

In the example configuration of FIG. 2, the longest cables are cable 230 and cable 234, both of which are 103meters in length. Data traveling via cable 230 and cable 234 travels 3 meters more as compared to data traveling via cable 226, which is 100 meters in length. Based on the speed at which data travels, *e.g., 0.2* m/ns, it will take data 15ns longer for data to be transmitted via cables 230 and 234 as compared to cable 226. A delay of 15ns may be programmed into the ingress optics hardware 206. Data traveling via cable 230 and cable 234 travels 1 meter more as compared to data traveling via cable 232. It will take data 5ns longer to be transmitted via cables 230 and 234 as compared to cable 232. A delay of 75ns may be programmed into the ingress optics hardware 212. Data traveling via cable 230 and cable 234 travels 2 meters more as compared to data traveling via cable 228. It will take data 10ns longer to be transmitted via cables 230 and 234 as compared to cable 228. A delay of 10ns may be programmed into the ingress optics hardware 208.

According to some examples, a delay may be programmed in the egress and/or ingress optics hardware based on the length of the cable and the time it takes the replication engine 204 to make copies of the data to be transmitted. According to some examples, the delay based on the replication engine 204 may be programmed in the egress optics hardware 206-214 while the delay based on the length of the cable may be programmed in the ingress optics hardware.

As one example, the replication engine 204 may require 1ns per replication of data. Based on the time it takes for the replication engine 204 to make a copy of the data for each cable 226-234, a delay of 4ns may be programmed in the egress optics hardware 206 for cable 226, a delay of 3ns may be programmed in the egress optics hardware 208 for cable 228, a delay of 2ns may be programmed in the egress optics hardware 210 for cable 230, a delay of 1ns may be programmed in the egress optics hardware 212 for cable 232, and a delay of 0ns may be programmed in the egress optics hardware 214 for cable 234. A delay of 0ns for cable 234 may indicate that, once the copy of data for cable 234 is created by replication engine 204, the data can be transmitted via all cables 226-234. Accordingly, as all the copies are made once the copy for cable 234 is made, a delay may not be required for cable 234. This delay may be programmed in the optics hardware 206-214 in addition to the delay based on the length of the cable.

According to some examples, the delay based on the length of the cable in additional to the delay based on the time it takes for the replication engine to copy the data may be programmed into the egress optics hardware while the delay based on the length of the cable is programmed into the ingress optics hardware. For example, the ingress optics hardware 206 may be programmed with a delay of 15ns based on the delay due to the difference in the lengths of the cables while the egress optics hardware 206 may be programmed with a delay of 19ns based on the delay due to the difference in the lengths of the cables and the replication engine. As another example, ingress optics hardware 208 may be programmed with a delay of 10ns based on the difference in the lengths of the cable while the egress optics hardware 208 may be programmed with a delay of 13ns based on the difference in the lengths of the cable and the replication engine.

The delays based on the length of cable and/or the amount of time it takes the replication engine to copy the data may be programmed in the optics hardware 206-214 via an I2C bus after the network 200 is deployed. By programming the delay after the network 200 is deployed, the ingress delay, or the delay based on the length of the cable, can be accurately determined. For example, the length of the cable after the network 200 is deployed can be determined based on the time it takes data to travel along a cable and the speed at which the data travels. This allows for the length of the cable to be accurately determined, rather than relying on manually cutting the cable to a specific length. By determining and using the length of the cable once the network 200 is deployed, manual changes to the network 200 are mitigated. For example, new cables having a specific length would not have to be installed, increasing or decreasing the length of a cable would be unnecessary, etc. This increases the efficiency of correcting the unfairness when transmitting and receiving data in the network 200 while decreasing the cost for materials as the delays are programmed into pre-existing hardware in the network 200.

FIG. 3 illustrates another example configuration of a network. The network 300 is substantially similar to the networks 100, 200 described with respect to FIG. 1 and FIG. 2 such that network 300 may include a networking switch 302, optics hardware 306-310, cables 324-328, and destination hardware 312-316. The destination hardware 216-224 may be, for example, a TOR. The destination hardware 312-316 may include respective optics hardware 318-322. The cables 324-328, like cables 226-234, may be different lengths. The delays determined based on the replication engine 304 and length of cables 324-328 may be programmed to the ingress and/or egress optics hardware 306-310 and/or the ingress and/or egress optics hardware 318-322. The programmed delays may reduce unfairness in unicast traffic between the networking switch 302 and the destination hardware 312-316.

As one example, cables 324 and 328 may be of the same length while cable 326 may be of a longer length. In such an example, a delay based on the length of the cables may be programmed in the ingress and/or egress optics hardware 306, 310 while programming a delay of zero in the ingress and/or egress optics hardware 308, 318, 320, 322. In another example, a delay based on the length of the cables may be programmed in the ingress and/or egress optics hardware 318, 322 while programming a delay of zero in the ingress and/or egress optics hardware 306, 310, 318, 320.

According to some examples, for a specific link, a delay may be programmed in the egress optics hardware at one end of the cable and a delay of zero may be programmed in the ingress optics hardware at the other end of the cable. This may allow the optics hardware to be further programmed to compensate for the asymmetry in the optics hardware. According to some examples, programming a delay in the egress optics hardware at one end of the cable and a delay in the ingress optics hardware at the other end of the cable may compensate for printed circuit board ("PCB") unfairness.

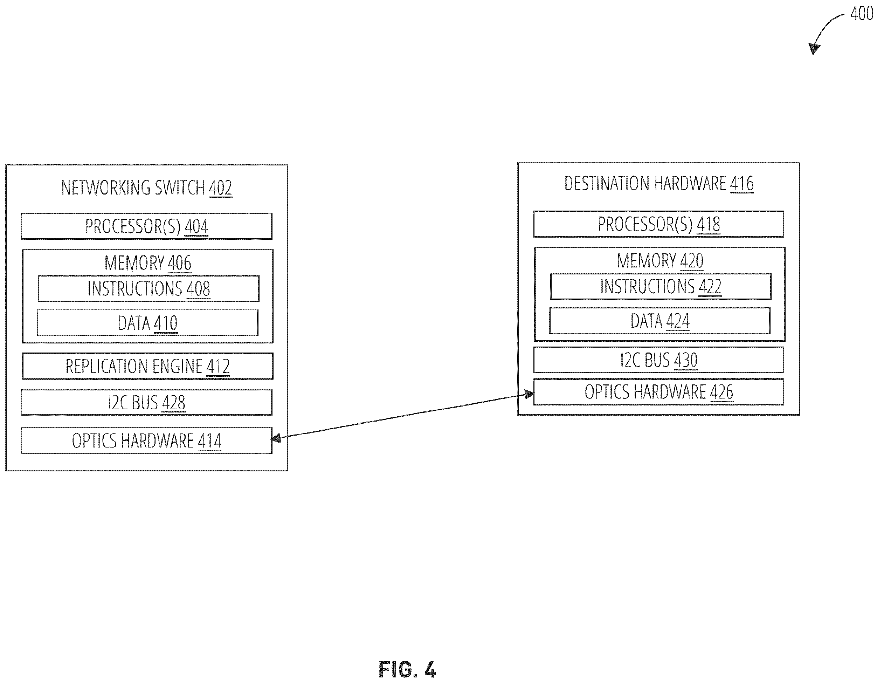

FIG. 4 illustrates an example system in which the features described above and herein may be implemented. While a number of components are shown, such components are merely nonlimiting examples and other components may additionally or alternatively be included. The figures should not be considered limiting the scope of the disclosure or usefulness of the features described herein. In this example, system 400 may include a networking switch 402 and one or more destination hardware 416.

The networking switch 402 may include one or more processors 404, memory 406, instructions 408, data 410, replication engine 412, and optics hardware 414. The networking switch 402 may be, for example, a TOR, a leaf of a multicast tree, an S2 switch, or the like.

The processors 404 may be any conventional processors, such as commercially available microprocessors. Alternatively, the one or more processors may be an application specific integrated circuit (ASIC) or other hardware-based processor. Although FIG. 4 functionally illustrates the processor, memory, and other elements of networking switch 402 as being within the same block, it will be understood by those of ordinary skill in the art that the processor, computing device, or memory may actually include multiple processors, computing devices, or memories that may or may not be stored within the same physical housing. Similarly, the memory may be a hard drive or other storage media located in a housing different from that of networking switch 402. Accordingly, references to a processor or computing device will be understood to include references to a collection of processors or computing devices or memories that may or may not operate in parallel.

Memory 406 may store information that is accessible by the processors, including instructions 408 that may be executed by the processors 404. The memory 406 may be a type of memory operative to store information accessible by the processors 404, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. The subject matter disclosed herein may include different combinations of the foregoing, whereby different portions of the instructions 408 and data 410 are stored on different types of media.

Memory 406 may be retrieved, stored or modified by processors 404 in accordance with the instructions 408. For instance, although the present disclosure is not limited by a particular data structure, the data 410 may be stored in computer registers, in a relational database as a table having a plurality of different fields and records, XML documents, or flat files. The data 410 may also be formatted in a computer-readable format such as, but not limited to, binary values, ASCII or Unicode. By further way of example only, the data 410 may be stored as bitmaps comprised of pixels that are stored in compressed or uncompressed, or various image formats (e.g., JPEG), vector-based formats (e.g., SVG) or computer instructions for drawing graphics. Moreover, the data 410 may comprise information sufficient to identify the relevant information, such as numbers, descriptive text, proprietary codes, pointers, references to data stored in other memories (including other network locations) or information that is used by a function to calculate the relevant data.

The instructions 408 can be any set of instructions to be executed directly, such as machine code, or indirectly, such as scripts, by the processor 404. In that regard, the terms "instructions," "application," "steps," and "programs" can be used interchangeably herein. The instructions can be stored in object code format for direct processing by the processor, or in any other computing device language including scripts or collections of independent source code modules that are interpreted on demand or compiled in advance. Functions, methods and routines of the instructions are explained in more detail below.

Replication engine 412 may copy data to be transmitted via a plurality of cables coupled to the networking switch. The replication engine 412 may require a predetermined period of time to replicate, or copy, the data. The predetermined period of time may be based on the size or amount of data to be copied. The replication engine 412 may copy the data enough times such that the data can be received synchronously by the destination hardware 416. For example, the replication engine 412 may make a total number of copies corresponding to the total number of cables minus one. The total number of copies may correspond to the total number of cables minus one. The minus one may be due to the original copy of the data being transmitted to the destination hardware 416.

The processors 404 may determine a delay to be programmed in the optics hardware 414. For example, the processors 404 may determine a delay for one or more of the cables coupled to the networking switch 402 based on the time it takes the replication engine 412 to make copies. In such an example the delay may be determined based on the number of remaining copies to be made for a given cable. The number of remaining copies may be determined based on how many copies has been made and the total number of copies to be made. For example, if there are ten cables coupled to the networking switch 402 and the replication engine 412 has made copies of data for cables 1-6, there are four remaining copies of data to be made after the copy of data has been made for cable 6. The number of remaining copies to be made may be multiplied by the amount of time it takes to make each copy to determine the delay for a given cable.

According to some examples, the processors 404 may, additionally or alternatively, determine a delay based on the length of the cables coupled to the networking switch 402. The processors 404 may determine a length of time it takes data to travel the length of each cable. The time it takes data to travel each cable may be compared to determine a delay. For example, the processors 404 may use the longest length of time it takes data to travel along a cable as a baseline. The remaining lengths of time may be compared to the longest length of time. The difference between the longest length of time and the length of time for the respective cable may be programmed in the optics hardware as a delay for that cable.

Optics hardware 414 may be configured via I2C bus 428. The optics hardware 414 may be configured with an ingress and/or egress delay.

Destination hardware 416 may include one or more processors 418, memory 420, instructions 422, data 424, optics hardware 426, and I2C bus 430. These components may operate in the same or similar fashion as those described above with respect to networking switch 402. The destination hardware 416 may be, in some examples, a TOR, an end user device, such as a smartphone, laptop, desktop, home assistant device, AR/VR glasses, etc., consumer hardware, or the like.

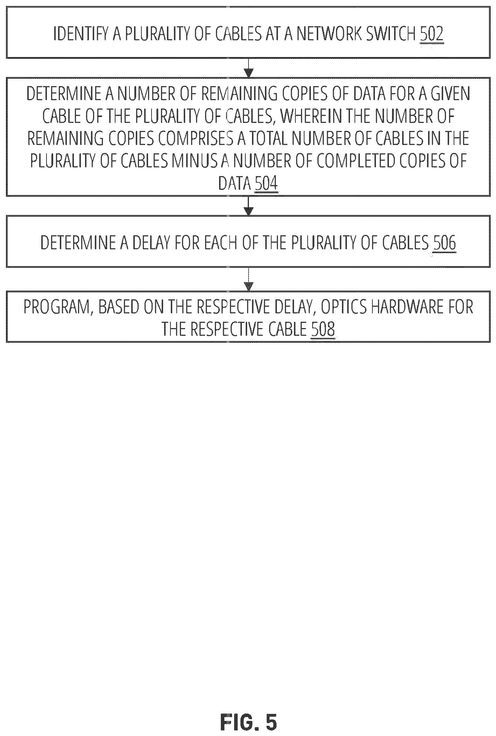

FIG. 5 illustrates an example method for programming optics hardware for a respective cable. The following operations do not have to be performed in the precise order described below. Rather, various operations can be handled in a different order or simultaneously, and operations may be omitted.

In block 502, a plurality of cables at a network switch are identified. The cables may be, for example, fiber optic cables. Each cable may provide a link between the network switch and a destination, such as an end user, top of rack, or the like.

In block 504, a number of remaining copies of data for a given cable of the plurality of cables is determined. The number of remaining copies may comprise a total number of cables in the plurality of cables minus a number of completed copies of data. For example, the network switch may include a replication engine. The replication engine may make a copy of the data to be transmitted via the plurality of cables. The copies may be made in an order corresponding to the order of the cables, the order of transmission, or the like. To determine the number of remaining copies to be made, the number of copies already made may be subtracted from the total number of copies to be made.

In block 506, a delay for each of the plurality of cables may be determined. The delay for a respective cable may be based on the remaining number of copies of data for the respective cable and a length of time to make each copy of data. The delay for each cable may allow for the data transmitted via respective cables to arrive at respective destinations synchronously. For example, a cable in the beginning of the order of cables may have a greater delay than a cable later in the order of cables. The cable in the beginning of the order may have the greater delay as there are more remaining copies to be made after the copy for that cable is made than for a cable at the end of the order.

In block 508, the optics hardware for the respective cable may be programmed based on the respective delay. For example, each cable may comprise ingress and/or egress optics hardware at one or both ends of the cable. The ingress and/or egress optics hardware at one or both ends may be programmed with the delay. The delay may allow for the data to be transmitted synchronously via the plurality of cables.

According to some examples, a length of each cable may be determined. A second delay may be determined based on the length of each cable. For example, a length of time for the data to travel along the length of each cable may be determined. The respective lengths of time may be compared. Based on the comparison, a delay may be determined. For example, a longer cable may have a greater length of time for the data to travel the length of the cable as compared to a shorter cable. The difference in time between the longer cable and the shorter cable may be added as a delay to the shorter cable. The second delay determined based on the length of the cable may be programmed into the ingress and/or egress optics hardware at one or both ends of the cable.

The delays may be programmed after the deployment of the network. By determining and programming the delays after the deployment of the network may allow for the delays to be determined based on real-time latency variances within the cables of the network. Further, by determining and programming the delays after the deployment of the network, the delay for each cable may be determined and implemented efficiently. For example, programming the delay for each cable mitigates the need to manually change the physical structure of the network, such as by adding or removing fiber, or by adding additional components. The delays may be programmed into the optics hardware, which is already part of the network. Thus, additional components are not necessary for implementing delays. According to some examples, the programmable nature of the delays may allow for the network to be scaled and implemented in large data centers.

By programming delays on a per cable basis, the unfairness in transmitting and receiving data may be mitigated. The delays may allow for data to be transmitted and received over the network synchronously, thereby reducing the unfairness of one destination receiving data before another.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A method, comprising:

   identifying, by one or more processors, a plurality of cables at a network switch (502);
   determining, by one or more processors, a number of remaining copies of data for a given cable of the plurality of cables, wherein the number of remaining copies comprises a total number of cables in the plurality of cables minus a number of completed copies of data (504);
   determining, by the one or more processors, a delay for each of the plurality of cables (506), wherein the delay for a respective cable is based on:

      the remaining number of copies of data for the respective cable, and
      a length of time to make each copy of data; and

      programming, by the one or more processors based on the respective delay, optics hardware for the respective cable (508).

2. The method of claim 1, wherein the optics hardware (414) comprises ingress and egress optics hardware; and
   wherein programming the optics hardware (414) optionally comprises programming at least one of the ingress optics hardware or the egress optics hardware.

3. The method of claim 2,
   wherein when programming the optics hardware (414), the method further comprises:

> programming, by the one or more processors (404) based on the delay for the respective cable, the ingress optics hardware; and transmitting, based on the delay for each of the plurality of cables, the data synchronously via the plurality of cables.

4. The method of one of claims 1 to 3, further comprising copying, by a replication engine (412), the data to be transmitted via the plurality of cables, wherein a total number of copies made by the replication engine (412) corresponds to the total number of cables in the plurality of cables minus one.

5. The method of one of claims 1 to 4, further comprising:

> determining, by the one or more processors (404), a length of each cable; and determining, by the one or more processors, a second delay based on the length of each cable.

6. The method of claim 5, wherein determining the second delay further comprises:

> determining, by the one or more processors (404), a length of time for the data to travel along the length of each cable;
> comparing, by the one or more processors (404), the lengths of time; and
> determining, by the one or more processors (404) based on the comparison, the second delay for each of the cables; and/or
> wherein the method further comprises programming, by the one or more processors (404) based on the second delay for the respective cable, the optics hardware (414) for the respective cable.

7. The method of one of claims 1 to 6, wherein the delay for each cable allows for the data transmitted via respective cables to arrive at respective destinations synchronously.

8. A device (402), comprising:
one or more processors (404), the one or more processors configured to:

> identify a plurality of cables at a network switch;
> determine a number of remaining copies of data for a given cable of the plurality of cables, wherein the number of remaining copies comprises a total number of cables in the plurality of cables minus a number of completed copies of data;
> determine a delay for each of the plurality of cables,

wherein the delay for a respective cable is based on:

> the remaining number of copies of data for the respective cable, and
> a length of time to make each copy of data; and
> program, based on the respective delay, optics hardware (414) for the respective

9. The device (402) of claim 8, wherein the optics hardware (414) comprises ingress and egress optics hardware.

10. The device (402) of claim 9, wherein program the optics hardware comprises programming at least one of the ingress optics hardware or the egress optics hardware; and/or
wherein when programming the optics hardware, the method further comprises:

> programming, by the one or more processors (404) based on the delay for the respective cable, the ingress optics hardware; and transmitting, based on the delay for each of the plurality of cables, the data synchronously via the plurality of cables.

11. The device (402) of one of claims 8 to 10, further comprising a replication engine (412) configured to copy the data to be transmitted via the plurality of cables, wherein a total number of copies made by the replication engine (412) corresponds to the total number of cables in the plurality of cables minus one.

12. The device (402) of one of claims 8 to 11, wherein the one or more processors (404) are further configured to:

> determine a length of each cable; and
> determine a second delay based on the length of each cable.

13. The device (402) of claim 12, wherein when determining the second delay, the one or more processors (404) are further configured to:

> determine a length of time for the data to travel along the length of each cable;
> compare the lengths of time; and
> determine, based on the comparison, a second delay for each of the cables; and/or
> wherein the one or more processors are further configured to program, based on the second delay for the respective cable, the optics hardware (414) for the respective cable.

14. The device (402) of one of claims 8 to 13, wherein the delay for each cable allows for the data transmitted via respective cables to arrive at respective destinations synchronously.

**15.** A non-transitory storage medium (406), the storage medium including instructions (408) that when executed by one or more processors (404), cause the one or more processors to perform the method of one of claims 1 to 7:

**Patentansprüche**

**1.** Verfahren, umfassend:

Identifizieren, durch einen oder mehrere Prozessoren, einer Vielzahl von Kabeln an einem Netzwerk-Switch (502);
Bestimmen, durch einen oder mehrere Prozessoren, einer Anzahl verbleibender Kopien von Daten für ein gegebenes Kabel der Vielzahl von Kabeln, wobei die Anzahl verbleibender Kopien eine Gesamtanzahl von Kabeln in der Vielzahl von Kabeln minus einer Anzahl fertiggestellter Kopien von Daten umfasst (504);
Bestimmen, durch den einen oder die mehreren Prozessoren, einer Verzögerung für jedes der Vielzahl von Kabeln (506),
wobei die Verzögerung für ein jeweiliges Kabel basiert auf:

der verbleibenden Anzahl von Kopien von Daten für das jeweilige Kabel, und
einer Zeitdauer, um jede Kopie von Daten zu erstellen; und
Programmieren, durch den einen oder die mehreren Prozessoren basierend auf der jeweiligen Verzögerung, von Optik-Hardware für das jeweilige Kabel (508).

**2.** Verfahren nach Anspruch 1, wobei die Optik-Hardware (414) Eingangs- und Ausgangs-Optik-Hardware umfasst; und
wobei das Programmieren der Optik-Hardware (414) optional das Programmieren wenigstens einer der Eingangs-Optik-Hardware oder der Ausgangs-Optik-Hardware umfasst.

**3.** Verfahren nach Anspruch 2,
wobei, wenn die Optik-Hardware (414) programmiert wird, das Verfahren ferner umfasst:

Programmieren, durch den einen oder die mehreren Prozessoren (404) basierend auf der Verzögerung für das jeweilige Kabel, der Eingangs-Optik-Hardware; und
Übertragen, basierend auf der Verzögerung für jedes der Vielzahl von Kabeln, der Daten synchron über die Vielzahl von Kabeln.

**4.** Verfahren nach einem der Ansprüche 1 bis 3, ferner umfassend Kopieren, durch eine Replikations-Engine (412),
der über die Vielzahl von Kabeln zu übertragenden Daten, wobei eine Gesamtanzahl von Kopien, die durch die Replikations-Engine (412) erstellt werden, der Gesamtanzahl von Kabeln in der Vielzahl von Kabeln minus eins entspricht.

**5.** Verfahren nach einem der Ansprüche 1 bis 4, ferner umfassend:

Bestimmen, durch den einen oder die mehreren Prozessoren (404), einer Länge jedes Kabels; und
Bestimmen, durch den einen oder die mehreren Prozessoren, einer zweiten Verzögerung basierend auf der Länge jedes Kabels.

**6.** Verfahren nach Anspruch 5, wobei das Bestimmen der zweiten Verzögerung ferner umfasst:

Bestimmen, durch den einen oder die mehreren Prozessoren (404), einer Zeitdauer, die die Daten benötigen, um entlang der Länge jedes Kabels zu laufen;
Vergleichen, durch den einen oder die mehreren Prozessoren (404), der Zeitdauern; und
Bestimmen, durch den einen oder die mehreren Prozessoren (404) basierend auf dem Vergleich, der zweiten Verzögerung für jedes der Kabel; und/oder
wobei das Verfahren ferner das Programmieren, durch den einen oder die mehreren Prozessoren (404) basierend auf der zweiten Verzögerung für das jeweilige Kabel, der Optik-Hardware (414) für das jeweilige Kabel umfasst.

**7.** Verfahren nach einem der Ansprüche 1 bis 6, wobei die Verzögerung für jedes Kabel ermöglicht, dass die über jeweilige Kabel übertragenen Daten an jeweiligen Zielen synchron ankommen.

**8.** Vorrichtung (402), umfassend:
einen oder mehrere Prozessoren (404), wobei der eine oder die mehreren Prozessoren konfiguriert sind zum:

Identifizieren einer Vielzahl von Kabeln an einem Netzwerk-Switch;
Bestimmen einer Anzahl verbleibender Kopien von Daten für ein gegebenes Kabel der Vielzahl von Kabeln,
wobei die Anzahl verbleibender Kopien eine Gesamtanzahl von Kabeln in der Vielzahl von Kabeln minus einer Anzahl fertiggestellter Kopien von Daten umfasst;

Bestimmen einer Verzögerung für jedes der Vielzahl von Kabeln,

wobei die Verzögerung für ein jeweiliges Kabel basiert auf:

der verbleibenden Anzahl von Kopien von Daten für das jeweilige Kabel, und einer Zeitdauer, um jede Kopie von Daten zu erstellen; und

Programmieren, basierend auf der jeweiligen Verzögerung, von Optik-Hardware (414) für das jeweilige Kabel.

9. Vorrichtung (402) nach Anspruch 8, wobei die Optik-Hardware (414) Eingangs- und Ausgangs-Optik-Hardware umfasst.

10. Vorrichtung (402) nach Anspruch 9, wobei das Programmieren der Optik-Hardware das Programmieren wenigstens einer der Eingangs-Optik-Hardware oder der Ausgangs-Optik-Hardware umfasst; und/oder

wobei, wenn die Optik-Hardware programmiert wird, das Verfahren ferner umfasst:

Programmieren, durch den einen oder die mehreren Prozessoren (404) basierend auf der Verzögerung für das jeweilige Kabel, der Eingangs-Optik-Hardware; und

Übertragen, basierend auf der Verzögerung für jedes der Vielzahl von Kabeln, der Daten synchron über die Vielzahl von Kabeln.

11. Vorrichtung (402) nach einem der Ansprüche 8 bis 10, ferner umfassend eine Replikations-Engine (412), die konfiguriert ist zum Kopieren der über die Vielzahl von Kabeln zu übertragenden Daten, wobei eine Gesamtanzahl von Kopien, die durch die Replikations-Engine (412) erstellt werden, der Gesamtanzahl von Kabeln in der Vielzahl von Kabeln minus eins entspricht.

12. Vorrichtung (402) nach einem der Ansprüche 8 bis 11, wobei der eine oder die mehreren Prozessoren (404) ferner konfiguriert sind zum:

Bestimmen einer Länge jedes Kabels; und Bestimmen einer zweiten Verzögerung basierend auf der Länge jedes Kabels.

13. Vorrichtung (402) nach Anspruch 12, wobei, wenn die zweite Verzögerung bestimmt wird, der eine oder die mehreren Prozessoren (404) ferner konfiguriert sind zum:

Bestimmen einer Zeitdauer, die die Daten benötigen, um entlang der Länge jedes Kabels zu laufen;

Vergleichen der Zeitdauern; und

Bestimmen einer zweiten Verzögerung für jedes der Kabel basierend auf dem Vergleich; und/oder

wobei der eine oder die mehreren Prozessoren ferner konfiguriert sind, um die Optik-Hardware (414) für das jeweilige Kabel basierend auf der zweiten Verzögerung für das jeweilige Kabel zu programmieren.

14. Vorrichtung (402) nach einem der Ansprüche 8 bis 13, wobei die Verzögerung für jedes Kabel ermöglicht, dass die über jeweilige Kabel übertragenen Daten an jeweiligen Zielen synchron ankommen.

15. Nichtflüchtiges Speichermedium (406), wobei das Speichermedium Anweisungen (408) beinhaltet, die, wenn sie durch einen oder mehrere Prozessoren (404) ausgeführt werden, den einen oder die mehreren Prozessoren veranlassen, das Verfahren nach einem der Ansprüche 1 bis 7 durchzuführen.

**Revendications**

1. Procédé, comprenant :

l'identification, par un ou plusieurs processeurs, d'une pluralité de câbles à un commutateur réseau (502) ;

la détermination, par un ou plusieurs processeurs, d'un nombre de copies de données restantes pour un câble donné de la pluralité de câbles, dans lequel le nombre de copies restantes comprend un nombre total de câbles dans la pluralité de câbles moins un nombre de copies de données effectuées (504) ;

la détermination, par les un ou plusieurs processeurs, d'un délai pour chacun de la pluralité de câbles (506),

dans lequel le délai pour un câble respectif est basé sur :

le nombre de copies de données restantes pour le câble respectif, et

une durée nécessaire pour effectuer chaque copie de données ; et

la programmation, par les un ou plusieurs processeurs sur la base du délai respectif, du matériel optique pour le câble respectif (508).

2. Procédé selon la revendication 1, dans lequel le matériel optique (414) comprend un matériel optique d'entrée et un matériel optique de sortie ; et

dans lequel la programmation du matériel optique (414) comprend éventuellement la programmation d'au moins l'un du matériel optique d'entrée ou du matériel optique de sortie.

3. Procédé selon la revendication 2, dans lequel, lors de la programmation du matériel optique (414), le procédé comprend également :

la programmation, par les un ou plusieurs processeurs (404) sur la base du délai pour le câble respectif, le matériel optique d'entrée ; et la transmission, sur la base du délai de chacun de la pluralité de câbles, des données de manière synchrone par le biais de la pluralité de câbles.

4. Procédé selon l'une des revendications 1 à 3, comprenant également la copie, par un moteur de réplication (412), des données à transmettre par le biais de la pluralité de câbles, dans lequel un nombre total de copies réalisées par le moteur de réplication (412) correspond au nombre total de câbles dans la pluralité de câbles moins un.

5. Procédé selon l'une des revendications 1 à 4, comprenant également :

la détermination, par les un ou plusieurs processeurs (404), d'une longueur de chaque câble ; et la détermination, par les un ou plusieurs processeurs, d'un second délai sur la base de la longueur de chaque câble.

6. Procédé selon la revendication 5, dans lequel la détermination du second délai comprend également :

la détermination, par les un ou plusieurs processeurs (404), d'une durée pendant laquelle les données parcourent la longueur de chaque câble ; la comparaison, par les un ou plusieurs processeurs (404), des durées ; et la détermination, par les un ou plusieurs processeurs (404) sur la base de la comparaison, du second délai pour chacun des câbles ; et/ou dans lequel le procédé comprend également la programmation, par les un ou plusieurs processeurs (404) sur la base du second délai pour le câble respectif, du matériel optique (414) pour le câble respectif.

7. Procédé selon l'une des revendications 1 à 6, dans lequel le délai de chaque câble permet aux données transmises par le biais des câbles respectifs d'arriver de manière synchrone à leurs destinations respectives.

8. Dispositif (402), comprenant : un ou plusieurs processeurs (404), les un ou plusieurs processeurs étant configurés pour :

identifier une pluralité de câbles au niveau d'un commutateur réseau ; déterminer un nombre de copies de données restantes pour un câble donné parmi la pluralité de câbles, dans lequel le nombre de copies restantes comprend un nombre total de câbles dans la pluralité de câbles moins un nombre de copies de données effectuées ; déterminer un délai pour chacun de la pluralité de câbles, dans lequel le délai pour un câble respectif est basé sur :

le nombre de copies de données restantes pour le câble respectif, et une durée nécessaire pour effectuer chaque copie de données ; et programmer, sur la base du délai respectif, le matériel optique (414) pour le câble respectif.

9. Dispositif (402) selon la revendication 8, dans lequel le matériel optique (414) comprend un matériel optique d'entrée et un matériel optique de sortie.

10. Dispositif (402) selon la revendication 9, dans lequel la programmation du matériel optique comprend la programmation d'au moins l'un du matériel optique d'entrée ou du matériel optique de sortie ; et/ou dans lequel, lors de la programmation du matériel optique, le procédé comprend également :

la programmation, par les un ou plusieurs processeurs (404) sur la base du délai pour le câble respectif, du matériel optique d'entrée ; et la transmission, sur la base du délai de chacun de la pluralité de câbles, des données de manière synchrone par le biais de la pluralité de câbles.

11. Dispositif (402) selon l'une des revendications 8 à 10, comprenant également un moteur de réplication (412) configuré pour copier les données à transmettre par le biais de la pluralité de câbles, dans lequel un nombre total de copies réalisées par le moteur de réplication (412) correspond au nombre total de câbles dans la pluralité de câbles moins un.

12. Dispositif (402) selon l'une des revendications 8 à 11, dans lequel les un ou plusieurs processeurs (404) sont également configurés pour :

déterminer une longueur de chaque câble ; et
déterminer un second délai sur la base de la longueur de chaque câble.

13. Dispositif (402) selon la revendication 12, dans lequel lors de la détermination du second délai, les un ou plusieurs processeurs (404) sont également configurés pour :

déterminer une durée pendant laquelle les données parcourent la longueur de chaque câble ;
comparer les durées ; et
déterminer, sur la base de la comparaison, un second délai pour chacun des câbles ; et/ou
dans lequel les un ou plusieurs processeurs sont également configurés pour programmer, sur la base du second délai pour le câble respectif, le matériel optique (414) pour le câble respectif.

14. Dispositif (402) selon l'une des revendications 8 à 13, dans lequel le délai de chaque câble permet aux données transmises par le biais des câbles respectifs d'arriver de manière synchrone à leurs destinations respectives.

15. Support de stockage non transitoire (406), le support de stockage comportant des instructions (408) qui, lorsqu'elles sont exécutées par un ou plusieurs processeurs (404), amènent les un ou plusieurs processeurs à réaliser le procédé selon l'une des revendications 1 à 7.

**FIG. 1**

**FIG. 2**

300

NETWORKING SWITCH 302

REPLICATION ENGINE 304

| OPTICS HARDWARE 306 | OPTICS HARDWARE 308 | OPTICS HARDWARE 310 |

324

326

328

OPTICS HARDWARE 318

OPTICS HARDWARE 322

OPTICS HARDWARE 320

DESTINATION HARDWARE 312

DESTINATION HARDWARE 316

DESTINATION HARDWARE 314

EP 4 440 142 B1

**FIG. 3**

```
┌─────────────────────────────────────┐          ┌─────────────────────────────────────┐
│      NETWORKING SWITCH 402          │          │    DESTINATION HARDWARE 416         │
│  ┌─────────────────────────────┐    │          │  ┌─────────────────────────────┐    │
│  │     PROCESSOR(S) 404        │    │          │  │     PROCESSOR(S) 418        │    │
│  └─────────────────────────────┘    │          │  └─────────────────────────────┘    │
│  ┌─────────────────────────────┐    │          │  ┌─────────────────────────────┐    │
│  │        MEMORY 406           │    │          │  │        MEMORY 420           │    │
│  │  ┌───────────────────────┐  │    │          │  │  ┌───────────────────────┐  │    │
│  │  │   INSTRUCTIONS 408    │  │    │          │  │  │   INSTRUCTIONS 422    │  │    │
│  │  └───────────────────────┘  │    │          │  │  └───────────────────────┘  │    │
│  │  ┌───────────────────────┐  │    │          │  │  ┌───────────────────────┐  │    │
│  │  │      DATA 410         │  │    │          │  │  │      DATA 424         │  │    │
│  │  └───────────────────────┘  │    │          │  │  └───────────────────────┘  │    │
│  └─────────────────────────────┘    │          │  └─────────────────────────────┘    │
│  ┌─────────────────────────────┐    │          │  ┌─────────────────────────────┐    │
│  │   REPLICATION ENGINE 412    │    │          │  │        I2C BUS 430          │    │
│  └─────────────────────────────┘    │          │  └─────────────────────────────┘    │
│  ┌─────────────────────────────┐    │          │  ┌─────────────────────────────┐    │
│  │       I2C BUS 428           │    │          │  │   OPTICS HARDWARE 426       │    │
│  └─────────────────────────────┘    │          │  └─────────────────────────────┘    │
│  ┌─────────────────────────────┐    │          │                                     │
│  │   OPTICS HARDWARE 414       │◄───┼──────────┼──────►                              │
│  └─────────────────────────────┘    │          │                                     │
└─────────────────────────────────────┘          └─────────────────────────────────────┘
```

400

**FIG. 4**

IDENTIFY A PLURALITY OF CABLES AT A NETWORK SWITCH 502

DETERMINE A NUMBER OF REMAINING COPIES OF DATA FOR A GIVEN CABLE OF THE PLURALITY OF CABLES, WHEREIN THE NUMBER OF REMAINING COPIES COMPRISES A TOTAL NUMBER OF CABLES IN THE PLURALITY OF CABLES MINUS A NUMBER OF COMPLETED COPIES OF DATA 504

DETERMINE A DELAY FOR EACH OF THE PLURALITY OF CABLES 506

PROGRAM, BASED ON THE RESPECTIVE DELAY, OPTICS HARDWARE FOR THE RESPECTIVE CABLE 508

**FIG. 5**

**EP 4 440 142 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016277272 A1

- US 2009060506 A1